(19) Europäisches Patentamt
European Patent Office
Office européen des brevets

(11) Numéro de publication: **0 091 845**
**B1**

(12) # FASCICULE DE BREVET EUROPEEN

(45) Date de publication du fascicule du brevet: **04.12.85**

(51) Int.Cl.⁴: **B 01 J 31/18**, C 10 G 27/10

(21) Numéro de dépôt: **83400556.3**

(22) Date de dépôt: **17.03.83**

(54) **Nouveau catalyseur d'oxydation de mercaptans en disulfures, son procédé de préparation et son application à l'adoucissement des distillats pétroliers.**

(30) Priorité: **09.04.82 FR 8206259**

(43) Date de publication de la demande: **19.10.83 Bulletin 83/42**

(45) Mention de la délivrance du brevet: **04.12.85 Bulletin 85/49**

(84) Etats contractants désignés: **BE DE GB IT NL**

(56) Documents cités:
**FR - A - 1 301 844**
**FR - A - 1 391 934**
**FR - A - 1 500 449**
**FR - A - 1 602 191**
**FR - A - 2 202 726**
**FR - A - 2 320 769**
**US - A - 4 298 502**

(73) Titulaire: **COMPAGNIE FRANCAISE DE RAFFINAGE Société anonyme dite:, 5, rue Michel-Ange, F-75781 Paris Cedex 16 (FR)**

(72) Inventeur: **Marty, Claude, 66, rue Guillemard, F-76600 Le Havre (FR)**
Inventeur: **Engelhard, Philippe, 197, rue Félix Faure, F-76600 Le Havre (FR)**

(74) Mandataire: **Jolly, Jean-Pierre et al, Cabinet BROT et JOLLY 83, rue d'Amsterdam, F-75008 Paris (FR)**

**EP 0 091 845 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention est relative à un nouveau catalyseur et à son utilisation pour l'adoucissement des fractions pétrolières par transformation des mercaptans en disulfures.

On sait la grande application qui est faite industriellement de la propriété que possèdent des chélates de certains métaux (cuivre, cobalt, vanadium, nickel) de catalyser la transformation des mercaptans en disulfures en présence d'oxygène. Cette propriété est mise en œuvre, par exemple avec la phtalocyanine de cobalt, pour adoucir, en milieu aqueux alcalin, l'essence naturelle, les essences provenant de la destillation ou du craquage, le naphta, le kérosène, l'essence d'aviation, les solvants de toutes compositions.

Il est également possible de procéder à cet adoucissement en utilisant un catalyseur d'oxydation fixé sur un support insoluble dans la soude et les hydrocarbures; un tel procédé est décrit dans le brevet français 1 301 844, selon lequel la charge hydrocarbonée est mise en contact avec un lit fixe de phtalocyanine de cobalt sur charbon actif, en présence d'air et d'un réactif alcalin.

Cette dernière technique présente cependant de nombreux inconvénients, en particulier du fait des difficultés liées à l'imprégnation du support avec le chélate et à la tendance de celui-ci à ce désorber, ce qui conduit à des opérations coûteuses de réimprégnation du support.

Il est en effet connu que la plupart des catalyseurs placés sur un lit fixe de charbon actif, ou de tout autre support tel que l'alumine ou la silice, ne sont pas toujours suffisamment liés audit support et qu'ils peuvent, par conséquent, être entraînés, dans certaines conditions, hors du réacteur avec la charge à traiter.

Les techniques qui se sont penchés sur ce problème du lit fixe ont dont cherché à rendre les catalyseurs plus fermement solidaires de leur support, et ils ont proposé, dans ce but, l'utilisation comme support de diverses résines.

C'est ainsi que US-A-3 396 123 décrit la préparation d'un nouveau type de support, par chauffage d'un mélange de résine thermoplastique et de charbon actif.

US-A-4 145 435 décrit l'application à d'autres domaines réactionnels et, en particulier, à celui de la catalyse homogène, de divers types de complexes métalliques fixés sur résines échangeuses d'ions.

La demande de brevet français FR-A-2 202 726, déposée au nom de la Demanderesse, décrit l'utilisation, comme catalyseur d'adoucissement, de métaux à l'état d'ions ou à l'état de complexes, fixés par imprégnation — et seulement par imprégnation — sur une résine échangeuse d'ions du type poly-(4-vinylpyridine) réticulée avec du divinylbenzène. Le composé métallique utilisé est, par exemple, le naphténate de cobalt.

Par ailleurs, FR-A-1 500 449, décrit la possibilité de fixer des complexes métalliques sur une résine échangeuse cationique en vue d'une utilisation dans un procédé d'adoucissement des hydrocarbures. Il décrit en particulier une zéolite traitée au cuivre et prétraitée à l'acide éthylène diamine tétracétique. Ce document envisage la possibilité d'utiliser des résines anioniques, mais celles-ci sont considérées comme non préférées et, dans ce cas, l'emploi ce complexes métalliques n'est pas divulgué.

En poursuivant ses recherches, la Demanderesse a établi qu'il est possible de fixer directement des ions complexes métalliques sur des résines échangeuses anioniques par échange et non plus par imprégnation comme décrit dans FR-A-2 202 726.

L'invention a par conséquent pour objet un catalyseur d'oxydation des mercaptans en disulfures, caractérisé en ce qu'il est constitué par un complexe métallique d'acide polyaminoalkylpolycarboxylique fixé par échange ionique sur une résine échangeuse d'anions basique.

Les catalyseurs selon l'invention sont constitués en particulier par des complexes de métaux comprenant notamment le cobalt, le zinc, le nickel, le fer, le cuivre, le vanadium, le titane, le chrome, ou le molybdène, avec un acide polyaminoalkyl polycarboxylique, fixés sur une résine échangeuse d'anions basique. Ces catalyseurs permettent d'obtenir l'adoucissement des mercaptans contenus dans les fractions pétrolières dans ces conditions particulièrement intéressantes.

La présente invention concerne également la préparation de ce nouveau catalyseur par échange d'un ion métallique complexé avec les anions d'une résine support. Cette opération peut, en particulier, être réalisée en trois étapes, dont le schéma général est le suivant:

Dans une première étape, on effectue l'échange, sur une résine acide, du cation que l'on veut fixer, par exemple selon le schéma réactionnel:

$$M^{2+} + 2\,RSO_4 - H \rightarrow (RSO_3)_2M + 2\,H^+,$$

où M désigne un métal tel que le cobalt, le zinc, le nickel, le fer, le cuivre, le vanadium, le titane, le chrome, ou le molybdène et R est un groupe du type styréne divinylbenzène.

La seconde étape consiste en la formation du complexe métallique, selon une réaction telle que la suivante:

$$(RSO_3)_2M + YH_2^{2-} \rightarrow 2\,RSO_3H + MY^{2-}$$

où Y désigne par exemple un reste éthylènediamine tétracétique.

Le complexant utilisé appartient aux composés possédant au moins un reste aminoacétique tels que les acides polyaminoalkylpolycarboxyliques, parmi lesquels on peut citer:

l'acide éthylènediamine tétracétique, l'acide nitrolotriacétique, l'acide cyclodiaminetriacétique, l'acide hydroxyéthylènediaminetriacétique, l'acide diéthylène triaminepentacétique et les cels correspondant, le complexant préféré selon la présente invention étant le sel disodique de l'acide éthylènediamine tétracétique.

Enfin, dans une troisième étape, on procède à l'échange du complexe $MY^{2-}$ avec les anions d'une résine basique.

Un grand nombre de résines échangeuses d'anions basiques sont utilisables conformément à l'invention, en particulier celles qui comprennent au moins un groupe fonctionnel amine primaire, secondaire et/ou tertiaire, ces dernières figurant parmi les plus efficaces, et celles qui comprennent un groupe fonctionnel ammonium quaternaire. On trouve un certain nombre de ces résines dans le commerce, notamment sous les marques déposées AMBERLYST, AMBERLITE ou DUOLITE.

La réaction d'échange avec une résine comprenant au moins un groupe fonctionnel amine tertiaire pourra s'écrire suivant le schéma:

$$2\,[R - N^{+}(CH_3)_3]\,X^- + MY^{2-} \rightarrow [R - N^{+}(CH_3)_3]_2MY^{2-} + 2\,X^-$$

où M, R et Y ont le sens précédent et où $X^-$ est un ion halogènure, par exemple in ion chlorure.

L'invention concerne enfin l'utilisation des catalyseurs définis ci-dessous pour l'adoucissement de distillats pétroliers. Dans une telle utilisation, le milieu à traiter est mis en présence du catalyseur sur lit fixe constitué par un complexe métallique d'acide polyaminoalkylpolycarboxylique fixé directement sur une résine échangeuse d'anion basique en présence d'une base forte et d'oxygène, à une température comprise entre 0 et 120° C et à une pression comprise entre 1 et 50 bars.

L'adoucissement en disulfures des mercaptanes contenus dans les fractions pétrolières, à l'acide du catalyseur conforme à l'invention, peut être effectué selon l'un des deux procédés qui seront décrits ci-après, en référence aux dessins annexés. Sur ces dessins:

La figure 1 illustre l'adoucissement d'une essence avec injection en continu d'une solution aqueuse de soude ou de potasse dans le réacteur;

La figure 2 illustre l'adoucissement d'une essence sans appoint de soude dans l'essence, c'est-à-dire strictement en milieu anhydre.

Selon la figure 1, l'essence à adoucir est introduite dans le réacteur 1 par la ligne 2. Le réacteur 1 contient un catalyseur conforme à l'invention, en lit fixe. De l'air est introduit dans le réacteur 1 par la ligne 3, tandit qu'une solution basique y est introduite par la ligne 5. La charge adoucie quitte le réacteur par la ligne 6 pour être introduite dans un séparateur 7, d'où l'air, la soude et l'essence adoucie sont évacués respectivement par les lignes 4, 8 et 9.

Selon la figure 2, l'essence à adoucir est introduite dans le réacteur 1 par la ligne 2, avec de l'air qui provient de la ligne 3. Comme dans le cas précédent, la charge quitte le réacteur par la ligne 6 pour être recueillie dans un séparateur liquide-gaz 7, d'où l'air et l'essence adoucie sont évacués respectivement par les lignes 4 et 8. Après un cycle de marche, la charge peut être envoyée dans un autre réacteur 1' disposé en parallèle, et le catalyseur usé du réacteur 1 peut alors être régénéré.

Les lits fixes des réacteurs 1 et 1' contiennent les résines à base de polyaminopolycarboxylates métalliques objets de la présente invention, mélangées directement avec de la soude ou de la patasse solide dans un proportion de 5 à 25% en poids de potasse ou de soude anhydre.

Dans la mise en œvre de la réaction d'adoucissement selon la présente invention, la température de réaction n'a pas un effet très critique. On peut opérer à température ambiante, mais il est également possible de mener la réaction à des températures plus élevées, sans toutefois dépasser des températures de l'ordre de 120° C. D'autre part, la pression requise est comprise entre 1 et 50 bars et, de préférence, entre 2 et 30 bars.

L'air est l'agent d'oxydation le plus approprié. Tout autre agent oxydant, tel que l'oxygène à l'état pur, est cependant utilisable, de même que tout autre gaz ou mélange de gaz contenant de l'oxygène. Ce dernier peut être introduit dans le réacteur en quantités stoechiométriques; il sera souvent préférable de l'utiliser en excès.

Les exemples suivants illustrent de façon non limitative la mise en œuvre du procédé selon la présente invention.

Exemple 1

Cet exemple concerne la préparation d'un catalyseur à base de cuivre:

1ère étape

On charge une colonne de rapport $\frac{h}{d} \simeq 12$, avec 90 g d'Amberlyst A 15, que l'on a au préalable fait gonfler dans de l'eau distillée; on fait passer 50 g de sulfate cuivrique ($CuSO_4$, 5 $H_2O$) dissous dans 500 $cm^3$ d'eau, puis on rince à l'eau distillée jusqu'à obtenir une solution incolore.

2ème étape

Pour former le complexe EDTA — cuivre, on fait passer sur la résine obtenue 800 $cm^3$ d'une solution à 5% en poids d'éthylène diamine tétracétique, dont le pH est fixé à 6.

Les effluents recueillis à la sortie de la résine sont colorés en bleu. Le pH de cette solution est à nouveau ramené à 6.

3ème étape

Dans une colonne identique à la précédente, on introduit 80 g d'Amberlyst A 26 humide (60% d'eau). Cette résine se présente sous forme chlorure; on échange les ions chlorures à l'aide d'une solution de soude 0,5 N (2 litres), puis on rince la résine jusqu'à pH neutre.

On fait alors passer sur la résine la solution contenant le complexe du cuivre, fraîchement préparé (durée: environ 8 heures).

La résine est ensuite lavée avec de l'eau distillée, afin d'éliminer toutes traces de cuivre non fixé, puis elle est séchée 18 heures, à 40° C et sous une pression de 20 mm de mercure.

Exemple 2

Cet exemple concerne la préparation d'un catalyseur à base de cobalt.

1ère étape

On charge une colonne de rapport $\frac{h}{d} \simeq 12$ avec 60 g d'Amberlyst A 15 (gonflée dans de l'eau) et l'on fait passer 40 g de nitrate de cobalt ($Co(NO)_3$, 6 $H_2O$) dissous dans 400 $cm^3$ d'eau (solution rouge-vin) puis on rince jusqu'à obtenir une solution incolore.

2ème étape

Pour former le complexe EDTA — cobalt, on fait passer sur la résine obtenue 550 $cm^3$ d'une solution à 5% en poids d'EDTA, dont le pH est fixé à 6. Les effluents recueillis à la sortie sont colorés en rouge. Le pH de cette solution est ramené à 6.

3ème étape

Dans une colonne identique à la précédente, on introduit 55 g d'Amberlyst A 26 humide, sous forme chlorure, et on fait passer la solution contenant le complexe de cobalt fraîchement préparé.

La solution sortante de pH 7 est incolore, tandis que la résine se colore en rouge.

Un test au nitrate d'argent, pratiqué sur l'effluent sortant, met en évidence la présence d'ions chlorures.

On rince ensuite la résine jusqu'à obtenir des eaux de lavage incolores (durée: 8 heures). On procède enfin à un séchage pendant 18 heures, à 40° C, sous une pression de 20 mm Hg.

Exemple 3

Cet exemple a pour objet l'adoucissement d'une essence sur un catalyseur à base de cuivre, sans appoint de soude dans l'essence, selon le schéma de la figure 2.

La résine préparée selon l'Exemple 1 est mélangée avec le la potasse solide dans un rapport pondéral de 90% de résine et 10% de potasse broyée. Elle est ensuite placée dans le réacteur tubulaire 1 de la figure 2.

Les essais ont été réalisés sur une charge d'essence catalytique synthétique composée de 50% en poids d'heptane, 30% d'heptène et 20% de benzène, et contenant 1000 ppm (ppm: parties en poids par million) de tertiobutylmercaptan.

La charge à adoucir est placée dans un réservoir qui alimente le réacteur 1, par la ligne 2, avec un appoint d'air (ligne 3).

Les conditions opératoires de la réaction sont les suivantes:

| | |
|---|---|
| — volume de catalyseur | 20 $cm^3$, |
| — pression relative | 0,5 bar, |
| — température | 30° C, |
| — volume d'air par gramme de mercaptan | 6 Nl/g, |
| — vitesse spatiale horaire de la charge (volume de charge passant par heure sur une unité de volume de catalyseur) | 1. |

Une fois traité dans le réacteur, l'effluent est séparé de l'air qu'il contient, dans le séparateur 7. L'analyse de cet effluent montre que le soufre des mercaptans est transformé en disulfures pendant 400 heures, avec un taux d'adoucissement supérieur à 95%.

Exemple 4

Cet exemple concerne le traitement d'une charge industrielle.

L'essai est réalisé dans les mêmes conditions que pour l'exemple précédent sur une charge industrielle composée d'un mélange 50/50 (en volume) d'essence légère et d'essence lourde issue d'un craqueur catalytique.

Cette charge, dont la densité à 15° C est de 0,779, contient 34,1% de composés aromatiques, 27,2% d'oléfines et 38,7% d'hydrocarbures saturés; elle contient en outre environ 800 ppm de phénols, 200 à 400 ppm de soufre de mercaptan et 1000 à 2000 ppm de soufre total.

Les conditions opératoires sont les suivantes:

| | |
|---|---|
| — volume du catalyseur | 20 $cm^3$, |
| — pression relative | 0,5 bar, |
| — température | 30° C, |
| — volume d'air par gramme de mercaptan | 2 Nl/g, |
| — vitesse spatiale horaire de la charge | 1 à 4. |

Malgré les variations de vitesse spatiale horaire imposées, l'essence est adoucie pendant 500 heures, pendant lesquelles la concentration en phénol de la charge est descendue à 28 ppm.

Exemple 5

Cet exemple se rapporte à l'adoucissement d'une charge industrielle sur un catalyseur à base de cobalt.

On traite une charge analogue à celle de l'Exemple 4, dans les mêmes conditions que dans cet exemple, avec un catalyseur à base de cobalt préparé selon l'Exemple 2 et mélangé avec 10% en poids de potasse solide.

L'essence adoucie présente les caractéristiques suivantes, comparées à la charge:

| | Charge | Effluent |
|---|---|---|
| Soufre total (ppm) | 2000 | 1970 |
| Mercaptans (ppm) | 400 | — |
| Phénols (ppm) | 900 | 600 |
| Couleur ASTM | ≤ 0,5 | ≤ 0,5 |
| Cobalt (ppm) | 0 | 0 |
| Gommes (mg/100 ml) | | |
| — non lavées: | 45 | 10 |
| — lavées: | 39 | 4 |

Exemple 6

Cet exemple est relatif à l'adoucissement d'une essence sur un catalyseur à base de fer.

L'essence est une essence industrielle contenant 400 ppm de soufre mercaptan que l'on traite dans des conditions similaires à celles de l'Exemple 4.

Les conditions opératoires sont les suivantes:

| | |
|---|---|
| — température | 30 à 50° C, |
| — pression relative | 0,5 bar, |
| — volume d'air par gramme de mercaptan | 2,4 Nl/g |
| — vitesse spatiale horaire de la charge | 1. |

On observe que la charge effluente ne contient pas de fer, et qu'elle est adoucie pendant plus 50 heures à des teneurs en mercaptans inférieures à 8 ppm.

Exemple 7

Cet exemple a pour objet l'adoucissement d'une essence industrielle sur un catalyseur à base de nickel.

L'essence est la même que das l'exemple précédent et elle est traitée à l'aide d'un catalyseur à base de nickel, préparé de façon analogue à celle du catalyseur au cobalt.

Les conditions opératoires sont les suivantes:

| | |
|---|---|
| — température | 30° C, |
| — pression relative | 0,5 bar, |
| — volume d'air par gramme de mercaptan | 2,7 Nl/g, |
| — vitesse spatiale horaire de la charge | 1. |

La charge effluente ne contient pas non plus de nickel, elle est adoucie pendant plus de 70 heures à des teneurs inférieures à ppm de mercaptans.

Exemple 8

Cet exemple concerne l'adoucissement d'une charge sur une résine avec appoint de soude, selon le schéma de la figure 1.

Une résine à base de cobalt est préparée conformément à l'Exemple 2 et mélangée avec de la potasse solide, dans un rapport pondéral de 90% de résine et 10% de potasse broyée. Le catalyseur est fixé dans le réacteur 1, conformément à la figure 1.

On envoie dans ce réacteur, par la ligne 2, une charge de même type que celle de l'Exemple 4, dans laquelle la quantité de soufre totale est de 1074 ppm.

Pendant toute la durée de l'injection, on envoie en continu, dans la ligne 5, 200 ppm par rapport à la charge d'une solution de soude à 3,4% en poids dans un mélange 75/25 en poids de méthanol et d'eau.

Les conditions et résultats de cet essai sont donnés dans le Tableau suivant:

| Temps (heures) | T (°C) | P (bar) | Vitesse spatiale horaire | Nl air / g de S.RSH | [Sol.NaOH] / charge (ppm) |
|---|---|---|---|---|---|
| 0— 50 | 30 | 8 | 1 | 2,2 | 200 |
| 50—290 | 30 | 8 | 2 | 3,4 | 200 |
| 290—310 | 30 | 20 | 1,5 | 2,2 | 266 |
| 310—450 | 50 | 20 | 1,5 | 2,2 | 266 |

Pendant les 250 premières heures de l'expérimentation, la concentration en mercaptan dans les effluents est inférieure à 2,5 ppm de soufre de mercaptan. Cette concentration augmente légère par la suite, sans toutefois dépasser 5 ppm après 450 heures de fonctionnement.

**Revendications**

1. Catalyseur d'oxydation des mercaptans en disulfures caractérisé en ce qu'il est constitué par un complexe métallique d'acide polyaminoalkylpolycarboxylique fixé par échange ionique sur une résine échangeuse d'anions basique.

2. Catalyseur selon la revendication 1, caractérisé en ce que l'acide polyaminoalkylpolycarboxylique est l'acide éthylène diamine tétracétique ou un des ses sels.

3. Catalyseur selon l'une des revendications 1 et 2, caractérisé en ce que le métal complexé est le cobalt, le nickel, le fer, le zinc, le cuivre, le vanadium, le titane, le chrome ou le molybdène.

4. Catalyseur selon la revendication 3, caractérisé en ce que le métal complexé est le cobalt, le cuivre, le nickel ou le fer.

5. Catalyseur selon l'une des revendications 1 à 4, caractérisé en ce que la résine échangeuse d'anions basique possède au moins un groupement fonctionnel amine ou un groupement fonctionnel ammonium quaternaire.

6. Procédé de préparation d'un catalyseur selon la revendication 1, caractérisé en ce qu'il comprend les trois étapes suivantes:

— échange du cation métallique sur une résine acide,
— formation d'un complexe par action sur ladite résine d'un acide polyaminoalkylpolycarboxylique,
— échange du complexe ainsi formé sur une résine échangeuse d'anions basique.

7. Utilisation du catalyseur selon la revendication 1, pour l'adoucissement des distillats pétroliers.

8. Utilisation, selon la revendication 7, caractérisée en ce que le milieu à traiter est mis en présence du catalyseur sur lit fixe constitué par un complexe métallique d'acide polyaminoalkylpolycarboxylique fixé directement sur une résine échangeuse d'anion basique en présence d'une base forte et d'oxygène, à une température comprise entre 0 et 120° C et à une pression comprise entre 1 et 50 bars.

9. Utilisation selon la revendication 8, caractérisée en ce que la résine à base de polyaminoalkylpolycarboxylate métallique est mélangée directement avec de la soude ou de la potasse solide dans une proportion allant de 5 à 25% en poids de potasse ou de soude, et en ce que la réaction d'adoucissement est faite sans appoint de base supplémentaire.

10. Utilisation selon la revendication 8, caractérisée en ce que l'oxygène est injecté dans la charge à adoucir en proportion stoechiométrique par rapport aux mercaptans.

## Patentansprüche

1. Katalysator zur Oxydation von Mercaptanen zu Disulfiden, dadurch gekennzeichnet, daß er aus einer metallischen Polyaminoalkylpolycarbonsäure-Komplexverbindung besteht, welche durch Ionenaustausch auf einem basischen Anionenaustauscherharz fixiert ist.

2. Katalysator nach Anspruch 1, dadurch gekennzeichnet, daß es sich bei der Polyaminoalkylpolycarbonsäure um Äthylendiamin-tetraessigsäure oder ein Salz derselben handelt.

3. Katalysator nach Anspruch 1 oder 2, dadurch gekennzeichnet, daß es sich beim komplexierten Metall um Kobalt, Nickel, Eisen, Zink, Kupfer, Vanadium, Titan, Chrom oder Molybdän handelt.

4. Katalysator nach Anspruch 3, dadurch gekennzeichnet, daß es sich beim komplexierten Metall um Kobalt, Kupfer, Nickel oder Eisen handelt.

5. Katalysator nach einem der Ansprüche 1 bis 4, dadurch gekennzeichnet, daß das basische Anionenaustauscherharz wenigstens eine funktionelle Amingruppe oder funktionelle quaternäre Ammoniumgruppe aufweist.

6. Verfahren zur Herstellung des Katalysators nach Anspruch 1, gekennzeichnet durch die folgenden drei Schritte:

- Austauschen des metallischen Kations auf einem sauren Harz,
- Bildung der Komplexverbindung durch Einwirkenlassen der Polyaminoalkylpolycarbonsäure auf das besagte Harz,
- Austauschen der so gebildeten Komplexverbindung auf dem basischen Anionenaustauscherharz.

7. Verwendung des Katalysators nach Anspruch 1 zum Süßen von Erdöldestillaten.

8. Verwendung nach Anspruch 7, dadurch gekennzeichnet, daß das zu behandelnde Medium in Gegenwart des im Festbett vorliegenden Katalysators bestehend aus einer unmittelbar auf einem basischen Anionenaustauscherharz fixierten, metallischen Polyaminoalkylpolycarbonsäure-Komplexverbindung mit einer starken Base und Sauerstoff bei einer Temperatur zwischen 0 und 120°C sowie einem Druck zwischen 1 und 50 bar in Berührung gebracht wird.

9. Verwendung nach Anspruch 8, dadurch gekennzeichnet, daß das Harz auf der Basis von metallischem Polyaminoalkylpolycarboxylat unmittelbar mit 5 bis 25 Gew.-% fester Pottasche oder Soda vermischt wird, und daß die Süßungsreaktion ohne Zusatz zusätzlicher Base durchgeführt wird.

10. Verwendung nach Anspruch 8, dadurch gekennzeichnet, daß der Sauerstoff in stöchiometrischem Verhältnis zu den Mercaptanen in die zu süßende Charge eingeblasen wird.

## Claims

1. Catalyst for oxidation of mercaptans into disulphides, characterised in that it is constituted by a metallic complex of polyaminoalkylpolycarboxylic acid fixed by ion exchange on a basic anion exchanger resin.

2. Catalyst according to Claim 1, characterised in that the polyaminoalkylpolycarboxylic acid is ethylene diamine tetracetic acid or one of its salts.

3. Catalyst according to one of Claims 1 and 2, characterised in that the complexed metal is cobalt, nickel, iron, zinc, copper, vanadium, titanium, chromium or molybdenum.

4. Catalyst according to Claim 3, characterised in that the complexed metal is cobalt, copper, nickel or iron.

5. Catalyst according to one of Claims 1 to 4, characterised in that the basic anion exchanger resin possesses at least one amine functional grouping or a quaternary ammonium functional grouping.

6. Process for the preparation of a catalyst according to Claim 1, characterised in that it comprises the following three stages:

- exchange of the metallic cation on an acid resin,
- formation of a complex by action of a polyaminoalkylpolycarboxylic acid upon the said resin,
- exchange of the complex thus formed on a basic anion exchanger resin.

7. Utilisation of the catalyst according to Claim 1 for the sweetening of petroleum fractions.

8. Utilisation according to Claim 7, characterised in that the medium to be treated is placed in the presence of the catalyst on a fixed bed constituted by a metallic complex of polyaminoalkylpolycarboxylic acid fixed directly upon a basic anion exchanger resin in the presence of a strong base and oxygen, at a temperature between 0 and 120°C and at a pressure between 1 and 50 bars.

9. Utilisation according to Claim 8, characterised in that the resin based on metallic polyaminoalkylpolycarboxylate is mixed directly with soda or solid potash in a proportion of from 5 to 25% by weight of potash or soda, and in that the sweetening reaction is carried out without balance of supplementary base.

10. Utilisation according to Claim 8, characterised in that the oxygen is injected into the charge to be sweetened, in stoichiometric proportion in relation to the mercaptans.

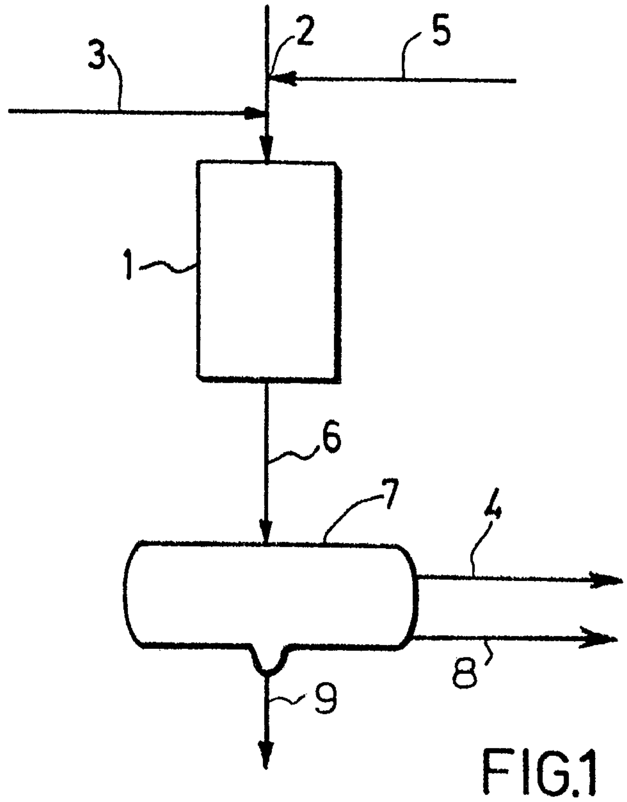


FIG.1

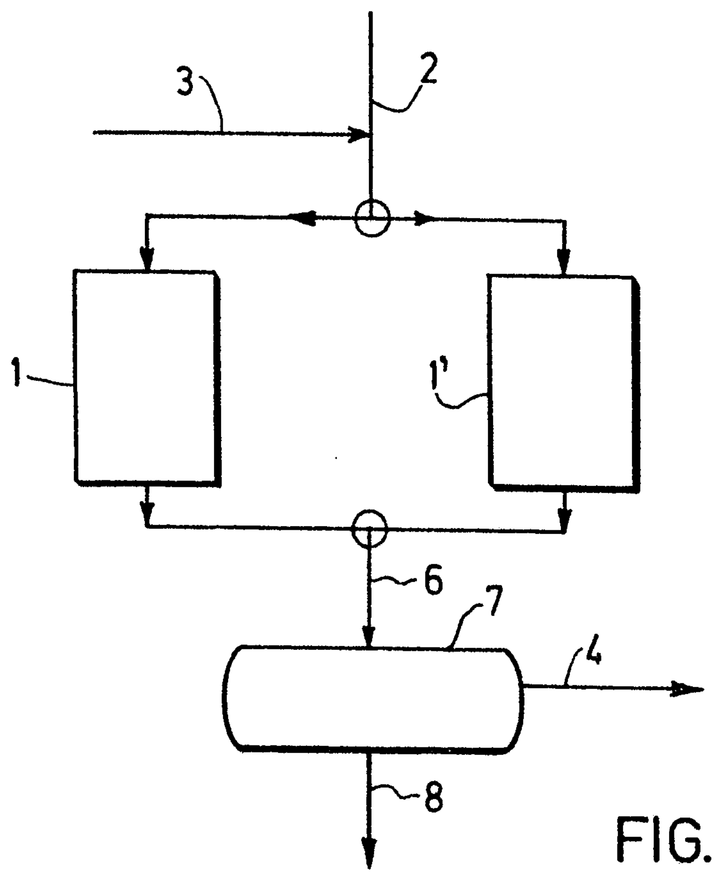


FIG.2